(19) Europäisches Patentamt
European Patent Office
Office européen des brevets

(11) EP 1 064 324 B1

(12) **FASCICULE DE BREVET EUROPEEN**

(45) Date de publication et mention de la délivrance du brevet:
**02.07.2003 Bulletin 2003/27**

(21) Numéro de dépôt: **99907674.8**

(22) Date de dépôt: **10.03.1999**

(51) Int Cl.[7]: **C08K 5/00**, C08K 3/22

(86) Numéro de dépôt international:
**PCT/FR99/00529**

(87) Numéro de publication internationale:
**WO 99/047599 (23.09.1999 Gazette 1999/38)**

(54) **COMPOSITION SILICONE ELASTOMERE RETICULANT A CHAUD, THERMIQUEMENT STABLE ET COLOREE SANS PASTELLISATION**

KEINE PASTELLTÖNE AUFWEISENDE, GEFÄRBTE THERMISCH STABILE WÄRMEHÄRTENDE SILIKONELASTOMER-ZUSAMMENSETZUNG

HOT SETTING SILICON ELASTOMER COMPOSITION, THERMALLY STABLE AND COLOURED WITHOUT PASTEL COLOURING

(84) Etats contractants désignés:
**AT BE CH DE DK ES FI FR GB GR IE IT LI LU NL PT SE**

(30) Priorité: **16.03.1998 FR 9803396**

(43) Date de publication de la demande:
**03.01.2001 Bulletin 2001/01**

(73) Titulaire: **RHODIA CHIMIE**
**92408 Courbevoie Cédex (FR)**

(72) Inventeurs:
- **GEORGE, Catherine**
  **F-69130 Ecully (FR)**
- **POUCHELON, Alain**
  **F-69330 Meyzieu (FR)**
- **SAC, Jacques**
  **F-69360 Ternay (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**WO-A-97/30130** **DE-A- 3 007 451**
**FR-A- 2 116 491** **US-A- 5 424 354**

- **PATENT ABSTRACTS OF JAPAN vol. 016, no. 320 (C-0962), 14 juillet 1992 & JP 04 091165 A (TOSHIBA SILICONE CO LTD), 24 mars 1992**
- **PATENT ABSTRACTS OF JAPAN vol. 010, no. 252 (C-369), 29 août 1986 & JP 61 078865 A (SHIN ETSU CHEM CO LTD), 22 avril 1986**

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).



Printed by Jouve, 75001 PARIS (FR)

## Description

La présente invention concerne un perfectionnement aux compositions d'organopolysiloxane, notamment celles du type vulcanisables à chaud en présence de peroxyde ou par une réaction de polyaddition, destinées à produire par réticutation un élastomère silicone coloré et à haute stabilité thermique.

La présente invention a aussi pour objet l'utilisation d'additifs permettant l'obtention de tels compositions et élastomères, ainsi que leur procédé de préparation et les pièces en élastomère silicone obtenues.

L'utilisation d'oxyde de titane est connue pour stabiliser les élastomères silicones face à de fortes agressions thermiques.

Ces oxydes de titane présentent néanmoins l'inconvénient de conduire dans le cas de produits colorés par un pigment à un élastomère de teinte "pasteltisée"

La littérature est riche en travaux pour la préparation de stabilisants thermiques pour silicone et sur le traitement des oxydes métalliques tels que l'oxyde de titane.

EP-A-745 644 décrit des compositions organopolysiloxanes qui, en se réticulant, conduisent à des élastomères transparents ayant une stabilité thermique élevée. Pour ce faire, la composition d'organopolysiloxane comprend, dispersées en son sein, des particules organophiles faites d'au moins un oxyde métallique sous forme de nanoparticules polycristallites - formées de préférence de cristallites de 4 à 6 nm - de taille d'au plus 50 nm et de surface spécifique BET d'au moins 250 $m^2/g$, de préférence comprise entre 250 et 300 $m^2/g$, et ayant subi un traitement de surface pour les rendre organophiles, consistant à greffer des groupements organosiliciques. Il n'est pas prévu de coloration de la composition d'organopolysiloxane.

Des travaux ont aussi été réalisés sur les oxydes de titane dans des domaines variés comme l'électronique ou les cosmétiques.

D'après EP-A-335 773, on connaît un procédé de préparation de dioxyde de titane comprenant l'hydrolyse d'un composé du titane en présence d'un acide ayant à la fois des groupements carboxyle et hydroxyle et/ou amine. Ce procédé conduit à l'obtention de particules cristallines de $TiO_2$. L'objectif est de proposer des particules de $TiO_2$ exemptes de soufre, pouvant être aisément dispersées dans des solutions aqueuses et utilisables pour des applications en électronique sous forme de titanate d'alcalino-terreux.

D'après WO-A-97 30130, on connaît des particules de dioxyde de titane de structure cristalline majoritairement anatase, recouvertes d'une couche d'un oxyde, hydroxyde ou oxohydroxyde métallique. Ces particules sont utilisées pour leurs propriétés anti-UV dans des formulations cosmétiques, dans des peintures ou dans des matières plastiques.

Il n'a toutefois jamais été proposé, ni suggéré qu'il était possible, de concilier stabilisation thermique par le dioxyde de titane et aptitude à la coloration en vue de l'obtention de teintes vives, franches, profondes, c'est-à-dire non pastellisées.

Le besoin existe toujours d'une composition d'organopolysiloxane qui, par réticulation, puisse conduire à un élastomère qui soit à la fois thermiquement stable grâce à l'ajout d'une charge, et qui puisse être colorée avec pour résultat l'obtention de la couleur attendue, et non pas une "pastellisation" comme c'est le cas dans l'art antérieur.

La déposante a découvert que stabilité thermique et coloration franche pouvaient être obtenues simultanément à condition d'utiliser un dioxyde de titane ayant des caractéristiques particulières.

La présente invention a donc pour objet une composition d'organopolysiloxane, conduisant par réticulation à un élastomère thermiquement stable et coloré non pastellisé, comprenant, dispersées en son sein, des particules de dioxyde de titane $TiO_2$ de taille d'au plus 80 nm et présentant un traitement de surface tel que les particules puissent être bien dispersées dans la composition de sorte que celle-ci ne comporte substantiellement pas de structure, e.g. agglomérats, de plus de 80 nm, et au moins un pigment organique ou minéral.

L'invention permet d'obtenir des élastomères réticulés présentant une coloration franche, substantiellement ou totalement dépourvue de perturbation résultant du dioxyde de titane (blanchiment conduisant à une pastellisation de la teinte finale). Le choix de ce dioxyde de titane permet donc, tout en assurant une stabilisation thermique de tout premier ordre, de conserver la teinte et le ton que l'on est en droit d'attendre du pigment en l'absence de perturbation. Cela permet notamment de produire des élastomères de couleurs vives, chaudes ou profondes.

L'invention peut notamment s'appliquer à la fabrication de joints thermique, tels que joints de four, de couleur ou même noir profond. Une autre application est la production de gaines en couleur pour câbles et fils électrique.

L'obtention d'une coloration conforme est facilement contrôlable à l'oeil nu. On vérifie ainsi l'impact des additifs. On peut s'aider en effectuant des comparaisons, e.g. à l'oeil nu ou encore par des mesures de luminescence et de coloration par rapport à des témoins colorés avec les mêmes pigments mais ne contenant pas de dioxyde de titane.

Par élastomère thermiquement stable dans le sens de l'invention, on entend notamment un élastomère qui conserve des propriétés élastomères et ne devient ni dur ni cassant lorsqu'il est soumis à une température supérieure à 200° C, notamment comprise entre 250° C et 300° C, maintenue pendant plusieurs jours, notamment plus de 3 jours, préférentiellement plus de 10 jours.

Les pigments organiques ou minéraux sont connus de l'homme du métier. A titre d'exemples, on peut citer :

- un pigment rouge à base d'un composé de formule brute $C_{40}H_{22}Cl_6N_6O_4$ (CAS n ° 0 406 18-31-3),
- un pigment jaune à base d'un oxyde mixte de formule $(Ti,Ni,Sb)O_2$ (CAS n° 8007-18-9),
- un pigment bleu à base d'un composé de formule brute $Co(AlCr)_2O_4$ (CAS n° 68187-11-1),
- du noir de carbone (CAS n° 1333-86-4),
- un pigment vert vendu sous la dénomination Green 7 par Primasil Ltd., Weobley, Herefordshire, Grande-Bretagne (CAS n° 1328-53-6).

Les pigments sont présents dans des proportions variables qui dépendent de l'effet final recherché. Ils sont en général présents en faibles quantités, e.g. des fractions de % ou quelques %. On peut bien entendu mélanger plusieurs pigments.

La composition pourra comprendre de 0,1 à 5 %, notamment de 0,2 à 3 %, préférentiellement de 0,3 à 1 %, environ de dioxyde de titane conforme à l'invention.

Le diamètre moyen des particules selon l'invention est d'au plus 80 nm, et de préférence d'au plus 60 nm ; il se situe plus précisément dans l'intervalle allant de 10 nm à 80 nm et, de préférence, de 10 nm à 60 nm. Ce diamètre est mesuré par microscopie électronique par transmission (MET).

Les particules de dioxyde de titane, dont la taille varie de 10 à 80 nm, de préférence de 10 à 60 nm, peuvent avantageusement être sous forme polycristalline, c'est-à-dire formées chacune de cristallites, notamment de quelques nanomètres, en particulier de 4 à 6 nm chacun.

Des particules particulièrement appropriées sont à base de dioxyde de titane de structure polycristalline majoritairement anatase ou majoritairement rutile. "Majoritairement" signifie que les taux d'anatase ou de rutile des particules de dioxyde de titane est supérieur à 50 % en masse. De préférence, les particules présentent un taux d'anatase ou de rutile supérieur à 80 %. Le taux de cristallisation et la nature de la phase cristalline sont mesurés par diffraction RX .

Les particules de dioxyde de titane présentent un traitement de surface pour assurer leur dispersion dans la composition d'organopolyslloxane, c'est-à-dire essentiellement à l'état isolé, substantiellement en l'absence d'agglomérats. D'une manière générale, le traitement de surface permet d'éviter substantiellement lors de la dispersion du dioxyde de titane dans la composition la formation de structures ou d'agglomérats de taille supérieure à 80 nm, de préférence à 60 nm. Différents traitements de surface appropriés sont connus dans l'art antérieur.

On peut citer le traitement par une couche d'oxyde, d'hydroxyde ou d'oxohydroxyde métallique tel que décrit, par exemple, dans la demande de brevet WO-A-97 30130 à laquelle l'homme du métier pourra se référer pour plus de détails.

Ces oxydes, hydroxydes ou oxohydroxydes métalliques peuvent être en particulier choisis parmi $SiO_2$, $ZrO_2$, les oxydes, hydroxydes ou oxohydroxydes de l'aluminium, du fer, du zinc, du titane, de l'étain, sous forme simple ou mixte. Par mixte, on entend un composé métallique à base d'au moins 2 des éléments précités (silico-aluminate. etc. ).

En général, le rapport en poids du ou des oxydes, hydroxydes ou oxohydroxydes métalliques sur le dioxyde de titane est d'au plus 60 % en poids.

De manière avantageuse, les particules sont recouvertes au moins partiellement d'une couche de silice et/ ou d'un oxyde, hydroxyde ou oxohydroxyde d'aluminium sous forme simple ou mixte.

Selon une variante préférée, les particules sont recouvertes d'une couche de silice et d'hydroxyde ou oxohydroxyde d'aluminium dans des teneurs en poids de 10 à 40 % en poids de $SiO_2$ pour de 1 à 20 % d'$Al_2O_3$, par rapport au dioxyde de titane. Des rapports de 30 % / 15 % ou 15 % / 5 % de $SiO_2/Al_2O_3$ par rapport au dioxyde de titane sont particulièrement appropriés.

On peut aussi recouvrir les particules d'une couche organosilicique, notamment par réaction avec un alcoxysilane, par exemple suivant, le traitement de surface proposé dans EP-A-745 644 auquel l'homme du métier pourra se reporter. Ce document décrit comment obtenir une couche organosilicique sur un dioxyde de titane de structure cristalline conforme à l'invention. Cette couche est telle qu'obtenue en faisant réagir une suspension hydro-alcoolique d'oxyde de titane selon l'invention avec une solution alcoolique anhydre comprenant au moins un alcoxysilane de formule (1)

$$Si(OR)_xR'_{4-x} \qquad (1)$$

dans laquelle R représente un groupe alkyle comportant de 1 à 6 atomes de carbone, R' représente un groupe hydrocarboné choisi parmi les groupes alkyle, cycloalkyle, aryle, alkylaryle, arylalkyle, alcényle et alcynyle comportant au moins 1 atome de carbone et x est un entier de 1 à 3, lesdits alcools, identiques ou différents, comportant de 1 à 5

atomes de carbone.

De préférence, avant leur traitement par l'alcoxysilane, les particules de dioxyde de titane de structure cristalline subissent un prétraitement : on fait réagir une suspension hydro-alcoolique (alcool ayant de préférence de 1 à 5 atomes de carbone) de ces particules avec au moins un tétraalcoxysilane de formule (2) :

$$Si(OR'')_4 \qquad (2)$$

dans laquelle R" représente un groupe alkyle comportant de 1 à 5 atomes de carbone.

De préférence, R est le groupe méthyle ou éthyle. De préférence encore, R' est le groupe octyle, dodécyle ou octadécyle. De préférence également, x vaut 3. De préférence également le rapport des composés de formule 1 et 2 varie entre 5 et 40 % en pondéral.

Les compositions selon l'invention comprennent, outre le dioxyde de titane traité en surface et le ou les pigments organiques et/ou minéraux, une gomme diorganopolysiloxane, une charge renforçante, notamment siliceuse, et un combiné de réticulation qui, dans le cas d'une composition réticulant par le peroxyde comprend au moins un peroxyde organique et qui, dans le cas d'une composition réticulant par polyaddition, comprend au moins un polyorganohydrogénosiloxane ayant, par chaîne, soit au moins 2, soit au moins 3, atomes d'hydrogène liés au silicium, et un catalyseur au platine, auquel cas (polyaddition) en outre la gomme diorganopolysiloxane présente obligatoirement, par chaîne, respectivement soit au moins 3 (cas où le polyorganohydrogénosiloxane a au moins 2 atomes d'hydrogène), soit au moins 2 (cas où le polyorganohydrogénosiloxane a au moins 3 atomes d'hydrogène) groupes alcényles, notamment vinyles, liés au silicium.

Les compositions comprennent aussi, de préférence, au moins un agent anti-structure, notamment une huile polyorganosiloxane à extrémités hydroxy ou alcoxy.

Elles peuvent aussi comporter dans le cas des compositions au peroxyde un autre stabilisant thermique, et dans le cas des compositions réticulant par polyaddition un inhibiteur de réticulation.

La présente invention a également pour objet l'utilisation d'une combinaison des particules de dioxyde de titane telles qu'elles viennent d'être décrites et de pigments organiques ou minéraux, pour la réalisation de telles compositions d'organopolysiloxane élastomère qui, par réticulation, conduisent à un élastomère thermiquement stable et coloré avec la coloration attendue du pigment organique ou minéral, sans pastellisation. Une telle utilisation pourra avoir les différentes caractéristiques énoncées à propos de la composition.

L'invention concerne aussi un procédé de fabrication de pièces en élastomère silicone thermiquement stable et coloré conformément à l'invention, consistant à mettre en oeuvre une composition telle que décrite ici et à induire sa réticulation.

Elle a aussi pour objet les pièces ainsi produites, telles que notamment des pièces thermiquement stables et de coloration vive, franche ou profonde.

L'invention va être maintenant décrite plus en détail à l'aide de modes de réalisation pris à titre d'exemples non limitatifs.

## METHODES et COMPOSITIONS PREFEREES

### 1) Méthode de préparation de particules de dioxyde de titane

Avant leur traitement de surface, les particules d'oxyde de titane peuvent être obtenues avantageusement par le procédé de préparation de dioxyde de titane tel que décrit dans EP-A-335 773, et complémentairement dans WO-A-97 30130 auxquels l'homme du métier pourra se reporter pour plus de détails. Ces particules d'oxyde de titane peuvent donc être obtenues par hydrolyse d'un composé du titane (T) en présence d'au moins un composé (U) choisi dans le groupe consistant en :

(i) les acides qui présentent :

- soit un groupement carboxyle et au moins deux groupements hydroxyles et/ou amines
- soit au moins deux groupements carboxyles et au moins un groupement hydroxyle et/ou amine,

(ii) les acides phosphoriques organiques de formules suivantes :

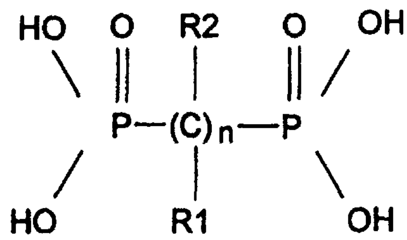

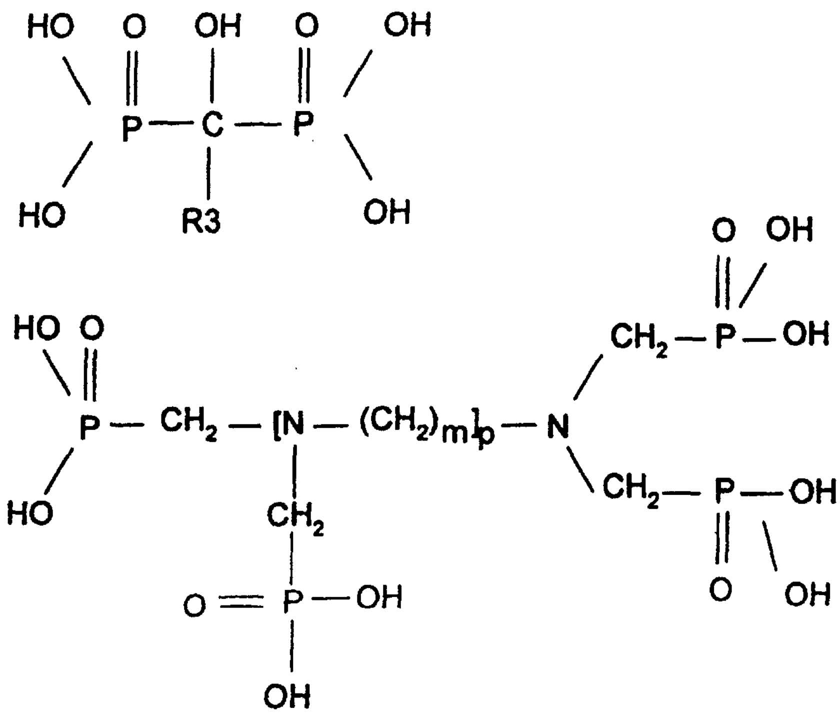

dans lesquelles, n et m sont des nombres entiers compris entre 1 et 6, p est un nombre entier compris entre 0 et 5, R1, R2, R3 identiques ou différents représentant un groupement hydroxyle, amino, aralkyl, aryl, alkyl ou l'hydrogène,

(iii) les composés capables de libérer des ions sulfates en milieu acide,

(iv) les sels des acides décrits ci-dessus,

et, de préférence, en présence de germes de dioxyde de titane, notamment présentant une taille inférieure à 8 nm et notamment dans un rapport pondéral exprimé en $TiO_2$ présent dans les germes/titane présent avant introduction des germes dans le milieu d'hydrolyse, exprimé en TïO$_2$, compris entre 0,01 et 3 %.

La solution de départ, destinée à être hydrolysée, est de préférence totalement aqueuse ; éventuellement on peut ajouter un autre solvant, un alcool par exemple, à condition que le composé du titane T et le composé U utilisés soient alors substantiellement solubles dans ce mélange.

En ce qui concerne le composé du titane T, on utilise en général un composé choisi parmi les halogénures, les oxyhalogénures, les alcoxydes, les nitrates, les sulfates de titane et plus particulièrement les sulfates synthétiques.

On entend par sulfates synthétiques des solutions de sulfates de titanyle réalisées par échange d'ions à partir de solutions de chlorure de titane très pures ou par réaction d'acide sulfurique sur un alcoxyde de titane.

De préférence, on opère avec des composés du titane du type halogénure ou oxyhalogénure de titane. Les halogénures ou les oxyhalogénures de titane plus particulièrement utilisés dans la présente invention sont les fluorures, les chlorures, les bromures et les iodures (respectivement les oxyfluorures, les oxychlorures, les oxybromures et les oxyiodures) de titane.

Selon un mode particulièrement préféré, le composé de titane est un oxyhalogénure, de préférence encore l'oxychlorure de titane $TiOCl_2$.

La quantité de composé de titane T présente dans la solution à hydrolyser n'est pas critique.

La solution initiale contient en outre au moins un composé U tel que défini précédemment. A titre d'exemples non limitatifs de composés U entrant dans le cadre de la présente invention, on peut citer notamment :

- les acides hydroxypolycarboxyliques, et plus particulièrement les acides hydroxydi- ou hydroxytricarboxyliques tels que l'acide citrique, l'acide maléique et l'acide tartronique,
- les acides (polyhydroxy)monocarboxyliques, comme par exemple l'acide glucoheptonique et l'acide gluconique,
- les acides poly(hydroxycarboxyliques), par exemple l'acide tartrique,
- les aminoacides dicarboxyliques et leurs amides correspondantes, comme par exemple l'acide aspartique, l'asparagine et l'acide glutamique,
- les aminoacides monocarboxyliques, hydroxylés ou non, comme par exemple la lysine, la sérine et la thréonine,
- l'aminotriphosphonate de méthylène, l'éthylènediaminotétraphosphonate de méthylène, le triéthylènetétraaminahexaphosphonate de méthylène, le tétraéthylènepentaaminoheptaphosphonate de méthylène, le pentaéthylènehexaaminooctaphosphonate de méthylène,
- le diphosphonate de méthylène ; de 1,1' éthylène ; de 1,2 éthylène ; de 1,1' propylène ; de 1,3 propylène; de 1,6 hexaméthylène ; le 2,4 dihydroxypentaméthylène - 2,4 diphosphonate ; le 2,5 dihydroxyhexaméthylène - 2,5 disphosphonate; le 2,3 dihydroxybutylène - 2,3 diphosphonate ; le 1 hydroxybenzyle - 1,1' diphosphonate ; le 1 aminoéthylène 1-1' diphosphonate ; l'hydroxyméthylène diphosphonate ; le 1 hydroxyéthylène 1,1' diphosphonate ; le 1 hydroxypropylène 1-1' diphosphonate; le 1 hydroxybutylène 1-1' diphosphonate ; le 1 hydroxyhexaméthylène-1,1' diphosphonate.

Comme déjà indiqué, il est également possible d'utiliser à titre de composé U tous les sels des acides précités. En particulier, ces sels sont soit des sels alcalins, et plus particulièrement des sels de sodium, soit des sels d'ammonium.

Ces composés peuvent être choisis aussi parmi l'acide sulfurique et les sulfates d'ammonium, de potassium, etc.

De préférence, les composés U tels que définis ci-dessus sont des composés hydrocarbonés de type aliphatique. Dans ce cas, la longueur de la chaîne principale hydrocarbonée n'excède pas de préférence 15 atomes de carbone, et plus préférentiellement 10 atomes de carbone. Le composé B préféré est l'acide citrique.

La quantité de composé U n'est pas critique. D'une manière générale, la concentration molaire du composé U par rapport à celle du composé du titane T est comprise entre 0,2 et 10 % et de préférence entre 1 et 5 %.

Les germes de dioxyde de titane, quand on en utilise et il s'agit là d'une modalité préférée, doivent présenter tout d'abord une taille inférieure à 8 nm, mesurée par diffraction X. On utilise des germes de dioxyde de titane présentant de préférence une taille comprise entre 3 et 5 nm.

Dans ce cas préféré de l'utilisation de germes, le rapport pondéral du dioxyde de titane présent dans les germes sur le titane présent dans le milieu d'hydrolyse avant introduction des germes - c'est-à-dire apporté par le composé du titane T - et exprimé en $TiO_2$ est compris entre 0,01 et 3 %. Ce rapport peut être préférentiellement compris entre 0,05 et 1,5 %. La réunion de ces deux conditions sur les germes (taille et rapport pondéral) associée au procédé tel que décrit précédemment permet de contrôler précisément la taille finale des particules de dioxyde de titane en associant à un taux de germes une taille de particule.

L'étape suivante consiste à réaliser l'hydrolyse de cette solution de départ par tout moyen connu de l'homme du métier et en général par chauffage. Dans ce dernier cas, l'hydrolyse peut de préférence être effectuée à une température supérieure ou égale à 70° C. On peut aussi travailler dans un premier temps à une température inférieure à la température d'ébullition du milieu, puis maintenir le milieu d'hydrolyse en palier à la température d'ébullition.

Une fois l'hydrolyse réalisée, les particules de dioxyde de titane obtenues sont récupérées par séparation du solide précipité des eaux mères, avant d'être redispersées dans un milieu liquide de manière à obtenir une dispersion de dioxyde de titane. Ce milieu liquide peut être acide ou basique. Il s'agit de préférence d'une solution basique, par exemple d'une solution aqueuse de soude. C'est à partir de cette dispersion que l'étape de précipitation des oxydes, hydroxydes ou oxohydroxydes métalliques sera réalisée.

Selon une variante particulière, après la récupération des particules obtenues à la suite de l'hydrolyse et avant leur remise en dispersion, on neutralise les particules et on leur fait subir au moins un lavage. Les particules peuvent être récupérées par exemple par centrifugation de la solution issue de l'hydrolyse, elles sont ensuite neutralisées par une base, par exemple une solution d'ammoniaque ou de soude, puis on les lave en les redispersant dans une solution aqueuse, enfin les particules sont séparées de la phase aqueuse de lavage. Après éventuellement un ou plusieurs autres lavages du même type, les particules sont remises en dispersion dans une solution acide ou basique.

**2) Méthode de traitement de surface**

A partir de ces particules polycristallites de dioxyde de titane, on réalise le traitement de surface de préférence par :

- . introduction, dans une dispersion de particules de dioxyde de titane présentant les caractéristiques ci-dessus définies, de précurseurs des oxydes, hydroxydes, ou oxohydroxydes métalliques en général sous forme de solutions aqueuses de sets, puis,
- . modification du pH pour obtenir la précipitation de ces oxydes, hydroxydes ou oxohydroxydes sur les particules de dioxyde de titane.

En général, on effectue cette précipitation à une température d'au moins 50 ° C.

Dans le cas de la précipitation de silice et d'un hydroxyde ou oxohydroxyde d'aluminium, la précipitation peut être réalisée à pH acide ou basique. Le pH est contrôlé par l'ajout d'un acide tel que l'acide sulfurique ou par l'introduction simultanée et/ou alternative d'un composé alcalin du silicium et d'un composé acide de l'aluminium. De préférence, dans ce cas, le pH est compris entre 8 et 10.

On peut précipiter la silice à partir d'un sel de silicium tel qu'un silicate alcalin.

L'hydroxyde ou oxohydroxyde d'aluminium peut être précipité à partir d'un sel d'aluminium tel que le sulfate d'alumine, l'aluminate de soude, le chlorure basique d'aluminium, l'hydroxyde d'aluminium diacétate.

On peut, après la précipitation, récupérer et laver les particules obtenues à la suite du traitement avant de les remettre en dispersion. Cette étape peut être réalisée par centrifugation et lavage ou, de préférence, par lavage par ultrafiltration. Le pH de l'eau de lavage est avantageusement de l'ordre de 5,5. Puis, les particules sont redispersées dans un autre milieu liquide de manière à obtenir une dispersion de particules de dioxyde de titane. Ce milieu liquide peut être acide ou basique ; de préférence. il s'agit d'une solution basique présentant un pH de l'ordre de 8-9.

Pour obtenir une poudre de particules selon l'invention, on sèche la dispersion issue du procédé, en général à une température inférieure à 110 °C.

Les méthodes de préparations qui viennent d'être décrites s'appliquent tout particulièrement bien pour obtenir des particules de dioxyde de titane sous forme majoritairement anatase, et présentant le traitement de surface souhaité.

S'agissant des particules de dioxyde de titane sous forme majoritairement rutile, et présentant le traitement de surface souhaité, on peut utiliser avantageusement les produits commercialisés par la société SACHTLEBEN CHEMIE sous la dénomination commerciale "Hombitec RM".

**3) Compositions silicone**

Les compositions polyorganosiloxanes durcissables visées dans le cadre de la présente invention, présentées en un seul ou plusieurs emballage(s) (mono- ou multicomposants), renferment un constituant principal formé d'un ou plusieurs constituant(s) polyorganosiloxane(s), un catalyseur approprié et éventuellement un ou plusieurs composé(s) pris dans le groupe formé par notamment: les charges renforçantes, les agents de réticulation, les agents anti-structure, les agens d'adhérence, les agents inhibiteurs du catalyseur.

Les polyorganosiloxanes, constituants principaux des compositions visées dans le cadre de l'invention, peuvent être linéaires, ramifiés ou réticulés, et comporter des radicaux hydrocarbonés et /ou des groupements réactifs consistant dans des groupements alkényles et des atomes d'hydrogène. A noter que les compositions polyorganosiloxanes sont amplement décrites dans la littérature et notamment dans l'ouvrage de Walter NOLL : "Chemistry and Technology of Silicones", Academic Press, 1968, 2ème édition, pages 386 à 409.

Plus précisément les polyorganosiloxanes, constituants principaux des compositions visées dans le cadre de l'invention, sont constitués de motifs siloxyles de formule générale :

$$R_nSiO_{\frac{4-n}{2}} \quad (I)$$

et/ou de motifs siloxyles de formule :

$$Z_xR_ySiO_{\frac{4-x-y}{2}} \quad (II)$$

formules dans lesquelles les divers symboles ont la signification suivante :

- les symboles R, identiques ou différents, représentent chacun un groupement de nature hydrocarbonée non hydrolysable, ce radical pouvant être :

  - un radical alkyle, halogénoalkyle ayant de 1 à 5 atomes de carbone et comportant de 1 à 6 atomes de chlore et/ou de fluor,
  - des radicaux cycloalkyles et halogénocycloalkyles ayant de 3 à 8 atomes de carbone et contenant de 1 à 4 atomes de chlore et/ou de fluor,
  - des radicaux aryles, alkylaryles et halogénoaryles ayant de 6 à 8 atomes de carbone et contenant de 1 à 4 atomes de chlore et/ou de fluor,
  - des radicaux cyanoalkyles ayant de 3 à 4 atomes de carbone ;

- les symboles Z, représentent chacun un atome d'hydrogène ou un groupe alkényle en $C_2$-$C_6$ ;
- n = un nombre entier égal à 0, 1, 2 ou 3 ;
- x = un nombre entier égal à 0, 1, 2 ou 3 ;
- y = un nombre entier égal à 0, 1 ou 2 ;
- la somme x + y se situe dans l'intervalle allant de 1 à 3.

A titre illustratif, on peut citer parmi les radicaux organiques R, directement liés aux atomes de silicium : les groupes méthyle ; éthyle ; propyle ; isopropyle ; butyle ; isobutyle ; n-pentyle ; t-butyle ; chlorométhyle ; dichlorométhyle ; alpha-chloroéthyle ; alpha,β-dichloroéthyle ; fluorométhyle ; difluorométhyle ; alpha, β-difluoroéthyle ; trifluoro-3,3,3 propyle, trifluoro cyclopropyle ; trifluoro-4,4,4 butyle ; hexafluoro-3,3,4,4,5,5 pentyle ; β-cyanoéthyle ; gamma-cyanopropyle ; phényle ; p-chlorophénykle ; m-chlorophényle ; dichloro 3,5 phényle ; trichlorophényle ; tétrachlorophényle ; o-, p- ou m-tolyle ; alpha-alpha-alpha-trifluorotolyle; xylyles comme diméthyl-2-3 phényle, diméthyl-3,4 phényle.

Préférentiellement, les radicaux organiques R liés aux atomes de silicium sont des radicaux méthyle, phényle, ces radicaux pouvant être éventuellement halogénés ou bien encore des radicaux cyanoalkyle.

Les symboles Z sont des atomes d'hydrogène ou des groupes alkényles qui sont de préférence des groupes vinyles.

La nature du polyorganosiloxane et donc les rapports entre les motifs siloxyles (I) et (II) et la répartition de ceux-ci est comme on le sait choisie en fonction du traitement de réticulation qui sera effectué sur la composition en vue de sa transformation en élastomère.

Les compositions polyorganosiloxanes, bicomposantes ou monocomposantes, réticulant à température ambiante ou à la chaleur par des réactions de polyaddition, essentiellement par réaction de groupements hydrogénosilylés sur des groupements alkényl-silylés, en présence d'un catalyseur métallique, généralement à base de platine, sont décrites par exemple dans les brevets US-A-3 220 972, 3 284 406, 3 436 366, 3 697 473 et 4 340 709. Les polyorganosiloxanes entrant dans ces compositions sont en général constitués par des couples à base d'une part d'un polysiloxane linéaire, ramifié ou réticulé constitué de motifs (II) dans lesquels le reste Z représente un groupement alkényle en $C_2$-$C_6$ et où x est au moins égal à 1, éventuellement associés à des motifs (I), et d'autre part d'un hydrogénopolysiloxane linéaire, ramifié ou réticulé constitué de motifs (II) dans lesquels le reste Z représente alors un atome d'hydrogène et où x est au moins égal à 1, éventuellement associés à des motifs (I).

Dans le cas des compositions réticulant par des réactions de polyaddition appelées EVC de polyaddition, le (ou les) constituant(s) polyorganosiloxane(s) porteur(s) de groupements alkényl-silylés ont une viscosité à 25° C supérieure à 500 000 mPa.s et, de préférence comprise entre 1 million de mPa.s et 30 millions de mPa.s et même davantage. Le (ou les) constituant(s) polyorganosiloxane(s) porteur(s) de groupements hydrogéno-silylés ont généralement une viscosité à 25° C au plus égale à 10 000 mPa.s et, de préférence, comprise entre 5 et 1 000 mPa.s.

Il peut aussi s'agir de compositions durcissables à température élevée sous l'action de peroxydes organiques. Le polyorganosiloxane ou gomme entrant dans de telles compositions appelées EVC au peroxyde est alors constitué essentiellement de motifs siloxyles (I), éventuellement associés à des motifs (II) dans lesquels le reste Z représente un groupement alkényle en $C_2$-$C_6$ et où x est égal à 1. De tels EVC sont par exemple décrits dans les brevets US-A-3 142 655, 3 821 140, 3 836 489 et 3 839 266.

Le constituant polyorganosiloxane de ces compositions EVC au peroxyde présente avantageusement une viscosité à 25° C au moins égale à 1 million de mPa.s et, de préférence, comprise entre 2 millions et 30 millions de mPa.s et même davantage.

Les compositions durcissables visées dans le cadre de l'invention peuvent comporter en outre -à côté du (ou des) constituant(s) polyorganosiloxane(s), du catalyseur et éventuellement de l'agent de réticulation et/ou de l'agent d'adhérence et/ou de l'agent anti-structure - des charges renforçantes, qui sont de préférence choisies parmi les charges siliceuses.

Les charges renforçantes sont choisies parmi les silices de combustion et les silices de précipitation. Elles

ont une surface spécifique, mesurée selon les méthodes BET, d'au moins 50 $m^2/g$, de préférence supérieure à 100 $m^2/g$, et une dimension moyenne des particules inférieure à 0,1 micromètre (µm).

Ces silices peuvent être incorporées de préférence telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexamèthylcyolotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 10 % environ.

On peut utiliser, quand on en a besoin, de 0,5 à 120 % en poids, de préférence de 1 à 100 % en poids de charge(s), par rapport au poids du (ou des) constituant(s) organopolysiloxane(s) des compositions.

Des compositions polyorganosiloxanes préférées sont celles, monocomposantes ou bicomposantes, réticulant à la chaleur par des réactions de polyaddition, appelées compositions EVC de polyaddition, qui comprennent :

(a') 100 parties en poids d'une gomme polydiorganosiloxane qui est un homopolymère ou copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité supérieure à 500 000 mPa.s à 25° C et de préférence d'au moins 1 million de mPa.s ;

(b') au moins un polyorganohydrogénosiloxane choisi parmi les homopolymères et les copolymères linéaires, cycliques ou en réseau présentant en moyenne par molécule au moins 2, de préférence au moins 3 atomes d'hydrogène liés à des atomes de silicium différents et dont les radicaux organiques liés aux atomes de silicium sont choisis parmi les radicaux méthyle, éthyle, phényle, au moins 60 % molaire de ces radicaux (et de préférence la totalité de ces radicaux) étant des radicaux méthyle, et présentant une viscosité allant de 5 à 1 000 mPa.s à 25° C, le réactif (b') étant utilisé en quantité telle que le rapport molaire des fonctions hydrure de (b') sur les groupes vinyles de (a') est compris entre 0,4 et 10 et de préférence entre 1,1 et 5 ;

(c') une quantité catalytiquement efficace d'un catalyseur au platine ;

(d') 0,5 à 150 partie(s) en poids, de préférence de 1 à 100 parties en poids, de charge(s) siliceuse(s) pour 100 parties en poids de l'ensemble des polyorganosiloxanes (a') + (b').

La gomme (a') est constituée, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3 ; cependant la présence en mélange avec ces motifs conformes, de motifs de structure différente, par exemple de formule (I) avec n = 1 et/ou $SiO_{4/2}$ et/ou de formule (II) où Z = vinyle et où x = 1 et y = 0 n'est pas exclue dans la proportion d'au plus 2 % par rapport au nombre total des motifs conformes.

De façon avantageuse, on met en oeuvre à titre de constituant (b'), au moins un polyorganohydrogénosiloxane linéaire dont la chaîne est constituée essentiellement de motifs (II) où Z = H et où x = y = 1, éventuellement associés à des motifs (I) où n = 2, cette chaîne étant bloquée à chaque extrémité par un motif (II) où Z = H et où x = 1 et y = 2 ou par un motif (I) où n = 3.

La quantité pondérale de catalyseur (c'), exprimée en poids de platine-métal par rapport au poids de la gomme (a') et du composé hydrogéno-silylé (b') est comprise entre 0,001 et 1 % et, de préférence, entre 0,01 et 0,5 %.

Les compositions silicones peuvent comporter en outre, à côté des constituants (a'), (b'), (c') et (d'), de 0,1 à 10 parties en poids d'huile(s) polydiméthylsiloxane(s) (e') à extrémités hydroxy ou alcoxy de viscosité à 25° C comprise entre 10 et 5 000 mPa.s, de préférence de 30 à 1000 mPa.s, pour 100 parties de gomme (a').

Ces huiles qui servent d'agent anti-structure sont formées d'un enchaînement de motifs de formule $R''_2SiO$ et bloquées à chaque extrémité de leur chaîne par un radical de formule OR' ; dans ces formules, les symboles R", identiques ou différents, représentent de radicaux méthyle, phényle, vinyle.

La signification des symboles R" et R' a été explicitée précédemment.

A titre d'exemples concrets de motifs de formule R"2SiO et de radicaux de formule OR', peuvent être cités ceux de formule :

$$(CH_3)_2SiO,\ CH_3(CH_2{=}CH)SiO,\ CH_3(C_6H_5)SiO,\ (C_5)_2SiO,\ C_6H_5(CH_2{=}CH)SiO,$$

$$-OH,\ -OCH_3,\ -OC_2H_5,\ -O\text{-}n.C_3H_7,\ -OCH_2CH_2OCH_3,$$

De préférence, sont utilisées :

- des huiles diméthylpolysiloxanes bloquées à chaque extrémité de leur chaîne par des radicaux hydroxyle, méthoxyle, bétaméthoxyle, de viscosité de 10 à 200 mPa.s à 25°C ;
- des huiles méthylphénylpolysiloxanes, constituées de motifs $CH_3(C_6H_5)SiO$, bloquées à chaque extrémité de leur chaîne par des radicaux hydroxyle et/ou méthoxyle, de viscosité de 40 à 2 000 mPa.s à 25° C.

D'autres agents "antistructures" peuvent remplacer en totalité ou en partie les huiles (D), par exemple le diphénylsilanediol et les silanes de formules :

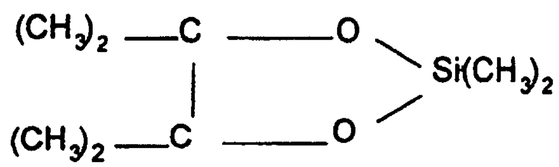

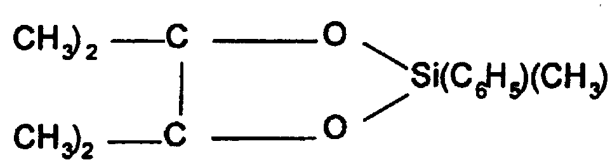

Si l'on a besoin de retarder la réticulation, on peut ajouter à la composition polyorganosiloxane réticulant par des réactions de polyaddition, un inhibiteur (f') du catalyseur au platine. Ces inhibiteurs sont connus. On peut en particulier utiliser les amines organiques, les silazanes, les oximes organiques, les diesters de diacides carboxyliques, les cétones acétyléniques et surtout, et il s'agit là des inhibiteurs préférés, les alcools acétyléniques (cf. par exemple FR-A-1 528 464, 2 372 874 et 2 704 553) et les polydiorganosiloxanes cycliques constitués essentiellement de motifs (II) où Z = vinyle et où x = y = 1, éventuellement associés à des motifs (I) où n = 2. L'inhibiteur, quand on en utilise un, est engagé à raison de 0,005 à 5 parties en poids, de préférence 0,01 à 3 parties en poids, pour 100 parties de la gomme (a').

D'autres compositions polyorganosiloxanes préférées sont encore celles, monocomposantes, appelées EVC au peroxyde, comprenant :

(a") 100 parties en poids d'une gomme polydiorganosiloxane qui est un homopolymère ou un copolymère linéaire présentant en moyenne par molécule au moins 2 groupes vinyles liés à des atomes de silicium différents, situés dans la chaîne et/ou en bouts de chaîne, dont les radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité d'au moins 1 million de mPa.s à 25° C, et de préférence d'au moins 2 millions de mPa.s ;

(b") 0,1 à 7 parties en poids d'un peroxyde organique ;

(c") 0,5 à 150 parties en poids, de préférence de 1 à 100 parties en poids, de charge(s) siliceuse(s) pour 100 parties en poids de gomme (a").

La gomme (a") est constituée, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3 ; cependant la présence en mélange avec ces motifs conformes, de motifs de structure différente, par exemple de formule (I) avec n = 1 et/ou $SiO_{4/2}$ et/ou de formule (II) où Z = vinyle et où x = 1 et y = 0, n'est pas exclue dans la proportion d'au plus 2% par rapport au nombre total des motifs conformes.

Les peroxydes organiques (b") sont utilisés à raison de 0,1 à 7 parties, de préférence 0,2 à 5 parties, pour 100 parties des gommes (a"). Ils sont bien connus des techniciens et comprennent plus spécialement le peroxyde de benzoyle, le peroxyde de dichloro-2,4 benzoyle, le peroxyde de dicumyle, le bis(t-butylperoxy)-2,5 diméthyl-2,5 hexane, le perbenzoate de t-butyle, le carbonate de peroxy t-butyle et d'isopropyle, le peroxyde de di-t-butyle, le bis(t-butylperoxy)-1,1 triméthyl-3,3,5 cyclohexane.

Les compositions de type EVC peuvent comporter en outre de 0,1 à 10 parties en poids d'huile(s) polydiméthylsiloxane(s) (d") à extrémités hydroxy ou alcoxy telles que décrites ci-avant comme composé (e') servant d'agent anti-structure.

La composition peut comprendre aussi un stabilisant thermique complémentaire (e"), en plus du dioxyde de titane, choisi notamment parmi un sel d'acide organique de métal, e.g. de fer ou de cérium, par exemple l'octoate de

fer ou de cérium, notamment à la dose de 0 à 300 ppm de fer par rapport au poids de la gomme (a").

Sans sortir du cadre de la présente invention, le fer peut être apporté sous forme d'une combinaison avec le dioxyde de titane.

Les compositions polyorganosiloxanes de type EVC de polyaddition ou EVC au peroxyde peuvent comporter en outre 0,01 à 4 parties, de préférence 0,02 à 2 parties pour 100 parties de gomme (a') ou (a") de méthacryloxyalicyltrialcoxysilane ou d'acryloxyalkyltrialcoxysilane [ingrédient (g') pour EVC de polyaddition ou (f") pour EVC au peroxyde].

A titre d'exemples concrets de ce silanes (g') ou (f") peuvent être cités :

$$CH_2 = C(CH_3) - COO - (CH_2)_3 - Si(OCH_3)_3$$

$$CH_2 = C(CH_3)- COO - (CH_2)_3 - Si (OC_2H_5)_3$$

$$CH_2 = CH - COO (CH_2)_3 - Si (OCH_3)_3.$$

La préparation des compositions polyorganosiloxanes appelées EVC de polyaddition et EVC au peroxyde contenant en plus le dioxyde de titane et le pigment s'effectue à l'aide de moyens mécaniques connus, par exemple des dispositifs équipés d'un agitateur à turbine, des pétrins, des mélangeurs à vis, des mélangeurs à cylindres. Les divers constituants sont incorporés dans ces appareils dans un ordre pouvant être quelconque ou qui tiendra compte de la forme monocomposante ou bicomposante souhaitée pour les compositions.

Pour les compositions au peroxyde, il est recommandé de charger la gomme (a"), puis dans l'ordre l'additif (d"), les charges siliceuses (c"), ce qui forme un mélange de base, puis le dioxyde de titane et le pigment avec ou avant le peroxyde (b"). Ces trois derniers composants sont de préférence ajoutés sur mélangeur à cylindre sur le mélange de base. Toutefois dioxyde de titane et pigment peuvent être présents indépendamment dans le mélange de base. L'additif (e") peut être incorporé au mélange de base ou sur le mélangeur à cylindre.

Pour les compositions de polyaddition, il est recommandé de charger la gomme (a'), puis dans l'ordre les charges siliceuses (d'), l'additif (f'), ce qui forme le mélange de base, puis le dioxyde de titane, le pigment et les composés b', c' et e'.

Les compositions polyorganosiloxanes contenant en plus de l'additif à base de dioxyde de titane et de pigment (s) peuvent être des compositions monocomposantes, c'est-à-dire livrées dans un seul emballage ; si la composition doit être stockée avant son utilisation ; il peut être souhaitable d'ajouter, dans le cas des compositions EVC de polyaddition, une quantité efficace d'un inhibiteur (dont on a parlé ci-avant) de l'action catalytique du platine qui disparaît par chauffage lors de la réticulation de la composition. Ces compositions contenant en plus de l'additif peuvent être aussi des compositions bicomposantes, c'est-à-dire livrées dans deux emballages distincts, dont un seul d'entre eux comporte le catalyseur de réticulation ; pour l'obtention de l'élastomère, on mélange le contenu des deux emballages et la réticulation a lieu grâce au catalyseur. De pareilles compositions monocomposantes et bicomposantes sont bien connues de l'homme de métier. Les compositions monocomposantes sont préférées.

Les compositions obtenues sont stables au stockage. Elles se transforment aisément ce qui permet de réaliser des formes très variées. Elles sont réticulées par chauffage. La durée du chauffage varie évidemment avec la température, la pression et la nature des réticulant. Elle est généralement de l'ordre de plusieurs minutes vers 100-200° C et de quelques secondes vers 250-350°C.

## Exemple 1 : Préparation d'une dispersion de particules selon l'invention avec un traitement de base de silice et d'hydroxyde d'aluminium

### Préparation des particules de départ

On ajoute successivement à 1300 g d'une solution d'oxychlorure de titane à 1,73 mol/kg :

- 121 g d'acide chlorhydrique à 36 %,
- 15,14 g d'acide citrique,
- 1562 g d'eau épurée,
- 10,30 g (3,6 %/$TiO_2$) de germes d'anatase présentant une taille comprise entre 5 et 6 nm.

Le mélange est porté à ébullition et y est maintenu pendant 3 h. La solution est ensuite filtrée et les particules

obtenues sont lavées à l'eau jusqu'à élimination complète des chlorures.

Elles sont ensuite redispersées à pH 9 (contrôlé par l'ajout de soude) avec un extrait sec de 20 % en poids.

La taille des particules mesurée par MET est de 60 nm. L'analyse par diffraction X indique que les particules sont à base de dioxyde de titane uniquement sous forme anatase.

Leur densité est de 2,52 (Vi=0,14 cc/g).

La surface spécifique, mesurée par la méthode BET sur les particules de la dispersion séchées à une température de dégazage de 150°C, est de 300 $m^2/g$.

Dans cet exemple, on a utilisé de l'acide citrique en présence d'acide chlorhydrique. On peut aussi n'utiliser que de l'acide citrique. A noter aussi qu'à la place de l'acide citrique, on peut utiliser par exemple de l'acide tartrique, de l'acide aspartique ou de glucoheptonate de sodium, comme décrit par exemple dans EP-A 335 773. De même, la présence de germes d'anatase n'est pas obligatoire.

La méthode permet d'obtenir deux qualités de dioxyde de titane sous forme anatase : une qualité ayant une taille de particules de 60 nm et une qualité ayant une taille de particules de 45 nm ; toutes ces particules sont formées de cristallites de 4 à 6 nm.

Traitement des particules par de la silice et de l'oxyde, hydroxyde ou oxohydroxyde d'aluminium

On introduit 750 g de la dispersion de départ dans un réacteur muni d'une agitation. Puis on ajoute 750 g d'eau épurée et on élève la température jusqu'à 90°C. Le pH de la dispersion est ajusté à 9 par ajout de soude.

On introduit tout d'abord de façon continue et simultanément une solution de silicate de sodium (solution à 335 g/l de $SiO_2$) contenant l'équivalent de 22,5 g de $SiO_2$ et une solution d'acide sulfurique à 80 g/l dans une quantité telle que le pH est maintenu à 9. Le débit de la solution de silicate de sodium est fixé à 2 ml/min. On observe ensuite un temps de mûrissement de 1 h à 90°C.

On introduit ensuite, à pH 9 et à 90°C, de façon continue une solution aqueuse d'aluminate de sodium (solution à 240 g/l en $Al_2O_3$) contenant l'équivalent de 7,5 g de $Al_2O_3$. Le débit de la solution d'aluminate est de 2 ml/min, le pH est régulé à 9 par introduction simultanée d'une solution aqueuse acide sulfurique 6N.

Lorsque les réactifs ont été introduits, on effectue un temps de mûrissement de 2 h à 90°C, puis la dispersion est refroidie.

La dispersion obtenue est centrifugée. Le gâteau obtenu est lavé trois fois avec de l'eau puis est redispersé.

Le pH de la dispersion est ajusté à 7,5 par l'ajout de $H_2SO_4$, elle présente un extrait sec de 30% en poids.

Propriétés des particules obtenues

Les tailles des particules mesurées par MET sont de 60 nm et de 45 nm.

La densité est de 2,15.

D'autres modalités et exemples de mise en oeuvre des particules de dioxyde de titane sont décrits dans WO-A-97 30130 et EP-A-335 773 et peuvent être appliqués dans le cadre de la présente invention.

## Exemple 2 : Préparation d'une dispersion de particules selon l'invention avec un traitement de surface organosilicique

Dans cet exemple, les particules à traiter sont des particules d'oxyde de titane sous forme anatase lenticulaire obtenues par d'oxychlorure de titane en présence d'acide citrique. Ces particules polycristallines (taille de cristallite = 6 nm environ) ont un diamètre de 40 nm, une surface BET de 290 $m^2/g$ et sont bien individualisées.

Dans un réacteur agité à 500 tours/minute, on prépare un pied de cuve en mélangeant, à 25° C, 240 ml d'eau permutée, 500 ml d'éthanol pur, 260 ml d'une solution aqueuse d'ammoniaque à 25 % en $NH_3$ et 10 g d'oxyde de titane.

On effectue le prétraitement de surface en ajoutant à un débit de 15 ml/h une solution contenant 12 g de tétraéthylorthosilicate dans 50 ml d'éthanol. En fin d'ajout, on obtient une suspension stable.

On ajoute ensuite à un débit de 15 ml/h, une solution contenant 5 g d'octyltriméthoxysilane dans 10 ml d'éthanol. En fin de réaction, on obtient une suspension floculée qui sédimente dans le réacteur. Le produit est lavé, séparé par centrifugation, séché à basse température et broyé.

D'autres modalités et exemples de mise en oeuvre des particules de dioxyde de titane sont décrits dans EP-A-745 644 et peuvent être appliquées dans le cadre de la présente invention.

**Exemple 3 : composition d'organopolysiloxane vulcanisable à chaud en présence de peroxyde**

1) Composition

On mélange intimement avec un malaxeur :

- 100 parties d'une gomme (a") poly(diméthyl)(méthylvinyl)siloxane bloquée à chacune de ses deux extrémités par un motif triméthylsiloxy et comprenant 0,0027 fonction vinyle pour 100 g de gomme, et de viscosité 10 millions de mPa.s à 25°C ;
- 45 parties de charge (c") qui est une silice de combustion traitée D4 (octaméthylcyclotetrasiloxane) de surface spécifique BET de 300 m2/g ;
- 2 parties d'un diméthylpolysiloxane linéaire (d") bloqué à ses deux extrémités par des groupements diméthylhydroxysiloxy et de viscosité 50 mPa.s.

On obtient le mélange de base, que l'on transfère sur un mélangeur à cylindre, pour incorporer, pour 100 parties de gomme :

- 0,6 partie de diméthyl-2,5 bis (t-butylperoxy)-2,5 hexane (b"),
- 0,05 partie de pigment vert Green 7 (Primasyl Ltd), et
- selon les cas :

  cas I: 0,75 partie de dioxyde de titane 60 nm selon l'exemple 1 et 0,27 partie d'octoate de fer ( $Fe^{++}$), équivalent à 105 ppm de fer,
  cas II : 0,75 partie de dioxyde de titane 45 nm selon l'exemple 1 et 0,27 partie d'octoate de fer, équivalent à 105 ppm de fer,
  cas III : 0,75 partie de dioxyde de titane P25 Degussa du commerce, non traité.

La composition est ensuite mise en forme et réticulée à environ 170 °C pendant 10 minutes.

2) Résultats

| | I | II | III |
|---|---|---|---|
| **Propriétés initiales après recuisson** | | | |
| DSA | 59 | 58 | 59 |
| Résistance Rupture MPa | 9 | 9,6 | 9,6 |
| Allongement % | 340 | 375 | 385 |
| **1 jour à 300° C** | | | |
| DSA | 64 | 61 | 62 |
| Résistance Rupture MPa | 5,9 | 7 | 6 |
| Allongement % | 200 | 255 | 225 |
| **3 jours à 300° C** | | | |
| DSA | 73 | 71 | 70 |
| Résistance Rupture MPa | 5,2 | 5,7 | 4,8 |
| Allongement % | 145 | 170 | 140 |
| **3 jours à 275° C** | | | |
| DSA | 66 | 65 | 62 |
| Résistance Rupture MPa | 5,9 | 6,3 | 6 |
| Allongement % | 180 | 210 | 200 |
| **7 jours à 275° C** | | | |
| DSA | 71 | 72 | 70 |
| Résistance Rupture MPa | 5,5 | 5,3 | 5,4 |
| Allongement % | 150 | 150 | 155 |
| **Luminescence "L" *** | 56 | 52 | 74 |
| **Coloration *** | 4 | 3,5 | 10 |

La luminescence et la coloration sont mesurées au chromamètre CR 200. Pour comparer deux couleurs, on mesure la clarté (L = luminescence) et un écart de teinte (delta E = coloration). La couleur se définit par trois paramètres : teinte, saturation et clarté. La chromaticité inclut la teinte et la saturation ; elle est spécifiée par deux coordonnées chromatiques (a, b). Comme ces deux coordonnées ne peuvent définir entièrement une couleur, un facteur de clarté doit être ajouté pour identifier précisément une couleur. Le système de couleur est le système CIE L a b. L'écart de coloration s'exprime ainsi :

$$\text{Delta E} = ((\text{delta L})^2 + (\text{delta a})^2 + (\text{delta b})^2)^{1/2}$$

Deux couleurs sont équivalentes si delta E est inférieur à 2.
DSA dureté = selon norme DIN 53 505
Résistance rupture et allongement % = sur éprouvettes AFNOR 46 002

**Exemple 4: Composition d'organopolysiloxane vulcanisable à chaud par polyaddition**

1) Composition

- 100 parties d'une gomme (a') poly(diméthyl)(méthylvinyl)siloxane bloquée à chacune de ses deux extrémités par un motif triméthylsiloxy et comprenant 0,0027 fonction vinyle pour 100 g de gomme, et de viscosité 10 millions de mPa.s à 25°C ;
- 36 parties de charge (d') qui est une silice de combustion traitée D4 (octaméthylcyclotetrasiloxane) de surface spécifique BET de 300 m2/g ;
- 0,8 partie d'huile poly(méthylhydrogéno)siloxane (b') bloquée à chacune de ses deux extrémités par des motifs triméthylsiloxy, comprenant 1,6 fonction SiH pour 100 g d'huile, et de viscosité 25 mPa.s à 25° C ;
- 2,5 parties d'un diméthylpolysiloxane linéaire (e') bloqué à ses deux extrémités par des groupements diméthylhydroxysiloxanes et de viscosité 50 mPa.s ;
- 0,6 parties d'un agent de couplage (g'), le gamma-méthacryloxypropyltriméthoxysilane ;
- 0,05 partie de pigment Green 7 (Primasyl Ltd) ; et
- selon les cas :

  cas IV : pas de dioxyde de titane,
  cas V : 0,75 partie de dioxyde de titane P25 Degussa du commerce, non traité,
  cas VI : 0,75 partie de dioxyde de titane 60 nm selon l'exemple 1.

La composition est ensuite additionnée de catalyseur au platine (c') , sous forme de catalyseur de Karstedt, apportant 0,05 % en poids de platine métal par rapport à l'ensemble gomme (a') + huile SiH (b'), mise en forme et réticulée à environ 140 °C pendant 10 minutes.

2) Résultats

| | IV | V | VI |
|---|---|---|---|
| Propriétés initiales sans recuisson | | | |
| DSA | 57 | 53 | 53 |
| Résistance Rupture MPa | 8,1 | 7,1 | 7,8 |
| Allongement % | 365 | 365 | 390 |
| 10 j à 200° C | | | |
| DSA | 67(+10) | 61(+8) | 61(+8) |
| Résistance Rupture MPa | 6,1(-25%) | 6,1(-14) | 6,7(-14%) |
| Allongement % | 180(-50%) | 240(-34%) | 270(-31%) |
| 7 j à 225° C | | | |
| DSA | Casse | 61(+8) | 59(+6) |
| Résistance Rupture MPa | | 5,4(-24) | 5,8(-26%) |
| Allongement % | | 200(-45%) | 230(-41%) |
| 3 jours à 250° C | | | |
| DSA | Casse | 60(+7) | 56(+3) |
| Résistance Rupture MPa | | 4,2(-41%) | 4,4(-43%) |
| Allongement % | | 150(-58%) | 190(-50%) |
| 7 jours à 250° C | | | |
| DSA | Casse | 67(+24) | 62(+9) |
| Résistance Rupture MPa | | 4,7(-34%) | 4,2(-46%) |
| Allongement % | | 110(-70%) | 140(-64%) |
| Luminescence "L" mesurée au chromamètre CR200 | 33 | 88 | 76 |
| Coloration | | 16 | 7 |

**Exemple 5: Composition d'organopolysiloxane vulcanisable à chaud par polyaddition**

1) Composition

- 100 parties d'une gomme (a') poly(diméthyl)(méthylvinyl)siloxane bloquée à chacune de ses deux extrémités par un motif triméthylsiloxy et comprenant 0,0027 fonction vinyle pour 100 g de gomme, et de viscosité 10 millions de mPa.s à 25°C ;
- 36 parties de charge (d') qui est une silice de combustion traitée D4 (octaméthylcyclotetrasiloxane) de surface spécifique BET de 300 m2/g ;
- 0,8 partie d'huile poly(méthylhydrogéno)siloxane (b') bloquée à chacune de ses deux extrémités par des motifs triméthylsiloxy, comprenant 1,6 fonction SiH pour 100 g d'huile, et de viscosité 25 mPa.s à 25° C ;
- 2,5 parties d'un diméthylpolysiloxane linéaire (e') bloqué à ses deux extrémités par des groupements diméthylhydroxysiloxanes et de viscosité 50 mPa.s ;
- 0,6 parties d'un agent de couplage (g'), le gamma-méthacryloxypropyltriméthoxysilave ;
- 0,05 partie de pigment Green 7 (Primasyl Ltd) ; et
- selon les cas :

  cas VII : pas de dioxyde de titane,

  cas VIII : 0,75 partie de dioxyde de titane de structure cristalline majoritairement rutile, recouverte d'une couche d'un oxyde, hydroxyde ou oxohydroxyde métallique (à base d'Al et de fer), qui est le produit vendu par la société SACHTLEBEN CHEMIE sous la dénomination commerciale "Hombitec RM 400" ; le diamètre moyen des particules d'oxyde de titane est trouvé égal à 10 nm.

La composition est ensuite additionnée de catalyseur au platine (c'), sous forme de catalyseur de Karstedt, apportant 0,05 % en poids de platine métal par rapport à l'ensemble gomme (a') + huile SiH (b'), mise en forme et réticulée à environ 140°C pendant 10 minutes.

2) Résultats

| | VII | VIII |
|---|---|---|
| Propriétés initiales sans recuisson | | |
| DSA | 58 | 58 |
| Résistance Rupture MPa | 7,5 | 7,4 |
| Allongement % | 330 | 325 |
| 3 jours à 250° C | | |
| DSA | | 62(+4) |
| Résistance Rupture MPa | Casse | 4,4(-40%) |
| Allongement % | | 180(-45%) |
| 7 jours à 250° C | | |
| DSA | | 64(+6) |
| Résistance Rupture MPa | Casse | 4,6(-38%) |
| Allongement % | | 165(-49%) |
| 1 jour à 275° C | | |
| DSA | | 60(+2) |
| Résistance Rupture MPa | Casse | 4,5(-39%) |
| Allongement % | | 175(-46%) |
| 3 jours à 275° C | | |
| DSA | | 65(+7) |
| Résistance Rupture MPa | Casse | 4(-46%) |
| Allongement % | | 130(-60%) |
| 10 jours à 275° C | | |
| DSA | | 72(+14) |
| Résistance Rupture MPa | Casse | 4,2(-43%) |
| Allongement % | | 100(-70%) |
| Luminescence "L" mesurée au chromamètre CR200 | | |
| | 33 | 60 |
| Coloration | | |
| | | 5 |

## Revendications

1. Composition d'organopolysiloxane où le constituant organopolysiloxane comprend une gomme diorganopolysiloxane, une charge renforçante siliceuse, et un combiné de réticulation qui, dans le cas d'une composition réticulant par le peroxyde comprend au moins un peroxyde organique et qui, dans le cas d'une composition réticulant par polyaddition, comprend au moins un polyorganohydrogénosiloxane ayant, par molécule, au moins 2 atomes d'hydrogène liés au silicium, et un catalyseur au platine, auquel cas en outre la gomme diorganopolysiloxane présente obligatoirement, par molécule, respectivement au moins 2 groupes alcényles, liés au silicium,
ladite composition étant **caractérisée en ce que**, pour conduire par réticulation à un élastomère thermiquement stable et coloré, non pastellisé, elle comprend en outre, dispersés en son sein :

   - d'une part de 0,1 à 5 %, par rapport au poids de la composition, de particules de dioxyde de titane $TiO_2$ de taille d'au plus 80 nm et présentant un traitement de surface de sorte qu'il n'y a substantiellement pas de structure de titane de plus de 80 nm, et
   - d'autre part au moins un pigment organique ou minéral.

2. Composition selon la revendication 1, **caractérisée en ce que** les particules de dioxyde de titane sont de structure polycristalline formée de cristallites.

3. Composition selon la revendication 2, **caractérisée en ce que** les cristallites formant les particules polycristallines ont un taille allant de 4 à 6 nm.

4. Composition selon l'une des revendications 1 à 3, **caractérisée en ce que** le traitement de surface est une couche d'oxyde, hydroxyde ou oxohydroxyde métallique.

5. Composition selon la revendication 4, **caractérisée en ce que** l'oxyde, hydroxyde ou oxohydroxyde métallique est choisi dans le groupe consistant en $SiO_2$, $ZrO_2$, oxydes, hydroxydes et bxohydroxydes de l'aluminium, du fer, du zinc, du titane, de l'étain, sous forme simple ou mixte.

6. Composition selon l'une des revendications 1 à 3, **caractérisée en ce que** le traitement de surface est une couche organosilicique.

7. Composition selon la revendication 6, **caractérisée en ce que** la couche organosilicique est obtenue en faisant réagir le dioxyde de titane avec un alcoxysilane.

8. Composition selon l'une des revendications 1 à 7, **caractérisée en ce qu'**elle comprend en outre un agent anti-structure, consistant dans une huile diméthylpolysiloxane à extrémités silanol.

9. Composition selon l'une des revendications 1 à 8, **caractérisée en ce que** dans le cas des compositions au peroxyde elle comporte un autre stabilisant thermique, et dans le cas des compositions réticulant par polyaddition un inhibiteur de réticulation.

10. Utilisation d'une combinaison d'une part de 0,1 à 5 %, par rapport au poids de la composition, de particules de dioxyde de titane $TiO_2$ , de taille d'au plus 80 nm, et traitées en surface de manière qu'il puisse être dispersé dans une composition silicone substantiellement sans structure de plus de 80 nm, et d'autre part de pigment organique ou minéral,
pour la réalisation de compositions d'organopolysiloxanes comprenant une gomme diorganopolysiloxane, une charge renforçante siliceuse, et un combiné de réticulation qui, dans le cas d'une composition réticulant par le peroxyde comprend au moins un peroxyde organique et qui, dans le cas d'une composition réticulant par polyaddition, comprend au moins un polyorganohydrogénosiloxane ayant, par molécule, au moins 2 atomes d'hydrogène liés au silicium, et un catalyseur au platine, auquel cas en outre la gomme diorganopolysiloxane présente obligatoirement, par molécule, respectivement au moins 2 groupes alcényles, liés au silicium,
lesquelles compositions, par réticulation, conduisent à un élastomère thermiquement stable et coloré, non pastellisé.

11. Utilisation selon la revendication 10, **caractérisée en ce qu'**elle est appliquée à la réalisation d'une composition d'organopolysiloxane selon l'une quelconque des revendications 2 à 9.

**12.** Procédé de fabrication de pièces en élastomère silicone thermiquement stable et coloré, consistant à mettre en oeuvre une composition d'organopolysiloxane selon l'une quelconque des revendications 1 à 9 et à induire sa réticulation.

**13.** Pièce en élastomère silicone thermiquement stable et coloré, susceptible d'être obtenue par la mise en oeuvre du procédé selon la revendication 12.

**Patentansprüche**

**1.** Organopolysiloxanzusammensetzung, worin der Organopolysiloxanbestandteil umfasst einen Diorganopolysiloxangummi, einen siliciumdioxidhaltigen Verstärkungsfüllstoff und eine Vernetzungsverbindung, die im Fall einer durch Peroxid vernetzenden Zusammensetzung wenigstens ein organisches Peroxid umfasst und die im Fall einer durch Polyaddition vernetzenden Zusammensetzung wenigstens ein Polyorganohydrogensiloxan, das pro Molekül wenigstens 2 an das Silicium gebundene Wasserstoffatome hat, und einen Platinkatalysator umfasst, in welchem Falle der Diorganopolysiloxangummi außerdem zwingend pro Molekül jeweils wenigstens 2 an das Silicium gebundene Alkenylgruppen aufweist,
wobei besagte Zusammensetzung **dadurch gekennzeichnet ist, dass** sie, um durch Vernetzung zu einem thermisch stabilen und gefärbten, keine Pastelltöne aufweisenden Elastomer zu führen, außerdem in ihrem Innern dispergiert umfasst

- einerseits 0,1 bis 5 %, bezogen auf das Gewicht der Zusammensetzung, Teilchen aus Titandioxid $TiO_2$ mit einer Größe von höchstens 80 nm, die eine solche Oberflächenbehandlung aufweisen, dass es im Wesentlichen keine Titanstruktur mit mehr als 80 nm gibt, und
- andererseits wenigstens ein organisches oder mineralisches Pigment.

**2.** Zusammensetzung gemäß Anspruch 1, **dadurch gekennzeichnet, dass** die Titandioxidteilchen eine aus Kristalliten gebildete polykristalline Struktur haben.

**3.** Zusammensetzung gemäß Anspruch 2, **dadurch gekennzeichnet, dass** die Kristallite, die die polykristallinen Teilchen bilden, eine Größe von 4 bis 6 nm haben.

**4.** Zusammensetzung gemäß einem der Ansprüche 1 bis 3, **dadurch gekennzeichnet, dass** die Oberflächenbehandlung eine Schicht aus Metalloxid, -hydroxid oder -oxohydroxid ist.

**5.** Zusammensetzung gemäß Anspruch 4, **dadurch gekennzeichnet, dass** das Metalloxid, -hydroxid oder -oxohydroxid aus der Gruppe ausgewählt ist, die aus $SiO_2$, $ZrO_2$, Oxiden, Hydroxiden und Oxohydroxiden von Aluminium, Eisen, Zink, Titan, Zinn in einfacher oder gemischter Form besteht.

**6.** Zusammensetzung gemäß einem der Ansprüche 1 bis 3, **dadurch gekennzeichnet, dass** die Oberflächenbehandlung eine siliciumorganische Schicht ist.

**7.** Zusammensetzung gemäß Anspruch 6, **dadurch gekennzeichnet, dass** die siliciumorganische Schicht erhalten wird, indem man das Titandioxid mit einem Alkoxysilan umsetzt.

**8.** Zusammensetzung gemäß einem der Ansprüche 1 bis 7, **dadurch gekennzeichnet, dass** sie außerdem ein Antistrukturmittel, das aus einem Dimethylpolysiloxanöl mit Silanolenden besteht, umfasst.

**9.** Zusammensetzung gemäß einem der Ansprüche 1 bis 8, **dadurch gekennzeichnet, dass** sie im Fall der Zusammensetzungen mit Peroxid außerdem einen weiteren Wärmestabilisator und im Fall der durch Polyaddition vernetzenden Zusammensetzungen einen Vernetzungsinhibitor umfasst.

**10.** Verwendung einer Kombination von einerseits 0,1 bis 5 %, bezogen auf das Gewicht der Zusammensetzung, Teilchen aus Titandioxid $TiO_2$ mit einer Größe von höchstens 80 nm und so oberflächenbehandelt, dass es in einer Siliconzusammensetzung im Wesentlichen ohne Struktur mit mehr als 80 nm dispergiert werden kann, und andererseits organischem oder mineralischem Pigment für die Herstellung von Organopolysiloxanzusammensetzungen, die umfassen einen Diorganopolysiloxangummi, einen siliciumdioxidhaltigen Verstärkungsfüllstoff und eine Vernetzungsverbindung, die im Fall einer durch Peroxid vernetzenden Zusammensetzung wenigstens ein organisches Peroxid umfasst und die im Fall einer durch Polyaddition vernetzenden Zusammensetzung wenigstens ein Polyorganohydrogensiloxan, das pro Molekül wenigstens 2 an das Silicium gebundene Wasserstoffatome hat, und einen Platinkatalysator umfasst, in welchem Falle der Diorganopolysiloxangummi außerdem zwingend pro Molekül jeweils wenigstens 2 an das Silicium gebundene Alkenylgruppen aufweist,
welche Zusammensetzungen durch Vernetzung zu einem thermisch stabilen und gefärbten, keine Pastelltöne aufweisenden Elastomer führen.

**11.** Verwendung gemäß Anspruch 10, **dadurch gekennzeichnet, dass** sie für die Herstellung einer Organopolysiloxanzusammensetzung gemäß einem der Ansprüche 2 bis 9 angewandt wird.

**12.** Verfahren zur Herstellung von Teilen aus thermisch stabilem und gefärbtem Siliconelastomer, das darin besteht, eine Organopolysiloxanzusammensetzung gemäß einem der Ansprüche 1 bis 9 einzusetzen und ihre Vernetzung auszulösen.

**13.** Teil aus thermisch stabilem und gefärbtem Siliconelastomer, das durch die Durchführung des Verfahrens gemäß Anspruch 12 erhalten werden kann.

## Claims

**1.** Organopolysiloxane composition in which the organopolysiloxane comprises a diorganopolysiloxane gum, a siliceous reinforcing filler and a crosslinking package which, in the case of a peroxide-crosslinkable composition, comprises at least one organic peroxide and which, in the case of a composition crosslinking by polyaddition, comprises at least one polyorganohydrogenosiloxane having, per molecule, at least 2 hydrogen atoms linked to the silicon, and a platinum catalyst, in which case the diorganopolysiloxane gum furthermore necessarily has, per molecule, at least 2 alkenyl groups respectively, these groups being linked to the silicon,
the said composition being **characterized in that**, so as to result, by crosslinking, in a coloured, but not pastel-shaded, thermally stable elastomer, it furthermore comprises, dispersed within it;

- on the one hand, from 0.1 to 5%, relative to the weight of the composition, of particles of titanium dioxide $TiO_2$ at most 80 nm in size and having a surface treatment so that there is substantially no titanium structure greater than 80 nm in size and,
- on the other hand, at least one organic or inorganic pigment.

**2.** Composition according to Claim 1, **characterized in that** the titanium dioxide particles have a polycrystalline structure which is formed from crystallites.

**3.** Composition according to Claim 2, **characterized in that** the crystallites forming the polycrystalline particles have a size ranging from 4 to 6 nm.

**4.** Composition according to one of Claims 1 to 3, **characterized in that** the surface treatment is a metal oxide, hydroxide or oxyhydroxide coating.

**5.** Composition according to Claim 4, **characterized in that** the metal oxide, hydroxide or oxyhydroxide is chosen from the group consisting of $SiO_2$, $ZrO_2$ and aluminium, iron, zinc, titanium and tin oxides, hydroxides and oxyhydroxides, in simple or mixed form.

**6.** Composition according to one of Claims 1 to 3, **characterized in that** the surface treatment is an organosiliceous coating.

**7.** Composition according to Claim 6, **characterized in that** the organosiliceous coating is obtained by making the titanium dioxide react with an alkoxysilane.

**8.** Composition according to one of Claims 1 to 7, **characterized in that** it furthermore contains an anti-structure agent, consisting of a polydimethylsiloxane oil having silanol chain ends.

**9.** Composition according to one of Claims 1 to 8, **characterized in that** in the case of peroxide-containing compositions it includes another heat stabilizer and in the case of compositions crosslinking by polyaddition it includes

a crosslinking inhibitor.

10. Use of a combination, on the one hand, of 0.1% to 5%, relative to the weight of the composition, of titanium dioxide $TiO_2$ particles at most 80 nm in size, which are surface-treated so that the titanium dioxide can be dispersed in a silicone composition substantially without any structure greater than 80 nm in size, and, on the other hand, of organic or inorganic pigment, for the production of organopolysiloxane compositions comprising a diorganopolysiloxane gum, a siliceous reinforcing filler and a crosslinking package which, in the case of a peroxide-crosslinkable composition, comprises at least one organic peroxide and which, in the case of a composition crosslinking by polyaddition, comprises at least one polyorganohydrogenosiloxane having, per molecule, at least 2 hydrogen atoms linked to the silicon, and a platinum catalyst, in which case the diorganopolysiloxane gum furthermore necessarily has, per molecule, at least 2 alkenyl groups respectively, these groups being linked to the silicon which compositions, by crosslinking, result in a coloured, but not pastel-shaded, thermally stable elastomer.

11. Use according to Claim 10, **characterized in that** it is applied to the production of an organopolysiloxane composition according to any one of Claims 2 to 9.

12. Process for manufacturing parts made of a coloured thermally stable silicone elastomer, consisting in processing an organopolysiloxane composition according to any one of Claims 1 to 9 and in crosslinking it.

13. Part made of a coloured thermally stable silicone elastomer, capable of being obtained by implementing the process according to Claim 12.